# EUROPÄISCHE PATENTSCHRIFT

(11) **EP 2 390 084 B1**
(45) Veröffentlichungstag und Bekanntmachung des Hinweises auf die Patenterteilung: **18.07.2012**
(21) Anmeldenummer: 10163930.0
(22) Anmeldetag: 26.05.2010
(51) Int. Cl.: B29C 51/42

(54) **Heizplatte zum Erwärmen einer Folie**
Heating plate for heating a film
Plaque chauffante destinée au réchauffement d'une feuille

(43) Veröffentlichungstag der Anmeldung: 30.11.2011
(73) Patentinhaber: UHLMANN PAC-SYSTEME GmbH & Co. KG, 88471 Laupheim (DE)
(72) Erfinder: Gertitschke, Detlev, 88471 Laupheim (DE)
(74) Vertreter: Wächter, Jochen

(56) Entgegenhaltungen:
- WO-A1-02/05596
- DE-U1- 8 806 970
- US-A- 3 661 484

## Beschreibung

Die vorliegende Erfindung betrifft eine Heizplatte zum Erwärmen einer Folie.

Derartige Heizplatten werden standardmäßig in Thermoformmaschinen verwendet und dienen dem Aufheizen der Folie vor der Verformung. Ein spezieller Anwendungsbereich sind Thermoformmaschinen für die Herstellung von Blisterverpackungen in der pharmazeutischen Industrie. Um einen hohen Wärmeübertrag zu erreichen, werden diese Heizplatten als Kontaktheizplatten ausgebildet. Eine derartige Heizplatte besteht üblicherweise aus einem Heizmittel, einer damit verbundenen Trägerplatte mit gutem Wärmeleitwert und einer thermisch aufgespritzten Verschleißschicht, die auf einer Arbeitsfläche der Trägerplatte, die der zu erwärmenden Folie zugewandt ist, aufgebracht ist. Zur Gewährleistung eines guten Wärmeübergangs sind Heizmittel, Trägerplatte und Verschleißschicht fest miteinander verbunden. Diese aufgespritzten Verschleißschichten sind nicht gasdicht und müssen in einem weiteren Fertigungsschritt versiegelt werden.

Je nach zu erwärmendem Folientyp sind aufgrund des unterschiedlichen Adhäsionsverhaltens verschiedene Oberflächenstrukturen und Beschichtungen der Verschleißschicht notwendig, so dass die Heizplatten beim Wechsel des Folientyps auch gewechselt werden müssen, um eine optimale Produktion sicher zu stellen. Ferner gasen PVC-haltige Folien bei Erwärmung auf Formtemperatur aus und die entstehenden Gase schädigen die porösen Oberflächen der Heizplatten bis zur Zerstörung der Verschleißschicht.

Eine Heizplatte für eine Thermoformmaschine ist aus der US 3,661,484 bekannt. Darin ist eine Maschine zum Herstellen von Behältern aus einer Folie offenbart, die eine Heizanordnung aufweist, um vor der Verformung der Folie Wärme auf die Folie zu übertragen. Die Heizanordnung weist eine untere Heizplatte auf, die zweiteilig ausgebildet ist. Eine erste fixierte untere Trägerplatte aus Aluminium wird mit einer zweiten austauschbaren oberen Trägerplatte aus Aluminium lösbar mittels Verschraubung verbunden. Die zweite obere Trägerplatte weist an ihrer der Folie zugewandten Arbeitsfläche eine fest aufgespritzte Verschleißschicht auf. Bei einem notwendigen Wechsel der Verschleißschicht wird die zweite obere Trägerplatte von der ersten unteren Trägerplatte gelöst und eine neue zweite obere Trägerplatte mit neuer Verschleißschicht angeschraubt. Dieser Wechsel liefert zwar weniger Materialabfall als der Austausch der gesamten Heizplatte, ist aber aufgrund der Vernichtung der gesamten oberen Trägerplatte in dieser Hinsicht immer noch verbesserungsfähig. Außerdem erfordert der Wechsel der oberen Trägerplatte aufgrund der Verschraubung einen erheblichen manuellen Aufwand.

Die WO 02/05596 A1 offenbart eine plattenförmige Schutzvorrichtung, die auf einem Kochfeld eines Herds aufgebracht wird, um Verschmutzungen aufzunehmen und das Kochfeld vor Verunreinigungen zu schützen. Für die Fixierung dieser plattenförmigen Schutzvorrichtung auf dem Kochfeld werden mehrere Möglichkeiten genannt, darunter eine magnetische Anhaftung der plattenförmigen Schutzvorrichtung am Kochfeld außerhalb der Kochplatten bzw. auch an den Kochplatten selbst.

Der vorliegenden Erfindung liegt die Aufgabe zugrunde, eine Heizplatte zum Erwärmen einer Folie anzugeben, die an verschiedene Folientypen auf einfache Weise angepasst werden kann.

Diese Aufgabe wird durch die Merkmale des Anspruchs 1 gelöst.

Erfindungsgemäß weist die Heizplatte zum Erwärmen einer Folie für eine Thermoformmaschine eine stark Wärme leitende Trägerplatte mit einer Arbeitsfläche auf, außerdem ein Heizmittel, das mit der Trägerplatte verbunden ist, und eine Verschleißschicht im Bereich der Arbeitsfläche der Trägerplatte. Dabei ist die Verschleißschicht als austauschbare Verschleißplatte ausgebildet, die magnetisch an der Arbeitsfläche der Trägerplatte gehalten ist.

Mit dieser Ausgestaltung ist es möglich, die Verschleißplatte bei einem Wechsel des zu erwärmenden Folientyps oder bei einem Defekt auf einfache Weise auszutauschen. Gleichzeitig wird durch die magnetische Verbindung eine sichere Anhaftung der Verschleißplatte an der Trägerplatte während des Betriebs gewährleistet und aufgrund des direkten Aneinanderliegens von Verschleißplatte und Trägerplatte ein guter Wärmeübertrag von Trägerplatte auf Verschleißplatte ermöglicht.

In einer bevorzugten Ausführungsform weist die Trägerplatte hitzebeständige Dauermagnete auf. Auf diese Weise wird gewährleistet, dass die magnetische Funktion auch während des Betriebs der Heizplatte in vollem Umfang aufrechterhalten bleibt.

Die Dauermagnete sind vorzugsweise in einem regelmäßigen Muster auf der Trägerplatte verteilt. Dadurch erzielt man einen gleichmäßigen Wärmeübergang und eine gleichmäßige Anhaftung der Verschleißplatte an der Trägerplatte und fördert einen werkzeugfreien Wechsel der Verschleißplatte.

Die Dauermagnete sind dabei vorzugsweise in Ausnehmungen der Trägerplatte befestigt. Auf diese Weise sind die Dauermagnete harmonisch in die Trägerplatte integriert.

Vorzugsweise sind die Ausnehmungen in der Arbeitsfläche der Trägerplatte ausgebildet. Dadurch ist der Abstand der Dauermagnete zur Verschleißplatte minimal und die Haftkraft wird somit maximiert.

Besonders bevorzugt sind als Dauermagnete flache Haftmagnete, etwa mit kreisförmiger Grundfläche.

Die Verschleißplatte besteht vorzugsweise aus einem ferritischen Edelstahl. Aufgrund seiner Korrosionsbeständigkeit ist Edelstahl ein ideales Basismaterial für eine korrosions- und verschleißbeständige Verschleißplatte.

Die Verschleißplatte weist eine Dicke von 0,2 bis 1,0 mm, vorzugsweise 0,5 bis 0,8 mm, auf. Ein Edelstahlblech mit einer solchen Dicke ist für den Einsatz im Rahmen einer Heizplatte gut geeignet, da der relativ geringe Wärmeleitwert von Edelstahl aufgrund der geringen Dicke der Verschleißplatte nicht besonders ins Gewicht fällt.

Vorzugsweise weist die Verschleißplatte auf ihrer der Arbeitsfläche der Trägerplatte abgewandten Seite eine Oberflächenstruktur mit einer Höhe der Erhebungen von 5 bis 30 µm auf. Auf diese Weise können auch besonders stark haftende Folientypen erwärmt werden, ohne dass die Folie an der Verschleißplatte haften bleibt.

Zum selben Zweck dient es, wenn die Verschleißplatte auf ihrer der Arbeitsfläche der Trägerplatte abgewandten Seite eine verschleißfeste Antihaftbeschichtung aufweist.

Zur Verbesserung des Wärmeübergangs und als Schmierschicht für den Austausch der Verschleißplatte kann zwischen der Verschleißplatte und der Arbeitsfläche der Trägerplatte eine Wärmeleitpaste aufgebracht sein.

Der Austausch der Verschleißplatte wird dadurch erleichtert, dass die Verschleißplatte mindestens ein Griffelement aufweist, welches im zusammengesetzten Zustand der Heizplatte seitlich über die Trägerplatte vorragt.

Zur Ausrichtung und Sicherung der Verschleißplatte auf der Trägerplatte weist die Trägerplatte am Rand ihrer Arbeitsfläche zwei vorstehende, senkrecht zueinander verlaufende Anschlagkanten auf, an denen die Verschleißplatte abgestützt ist.

Weitere Merkmale und Vorteile der vorliegenden Erfindung ergeben sich aus der nachfolgenden Beschreibung unter Bezugnahme auf die Zeichnungen.
- Fig. 1: ist eine Querschnittsansicht einer Ausführungsform der erfindungsgemäßen Heizplatte;
- Fig. 2: ist eine Querschnittsansicht einer weiteren Ausführungsform der erfindungsgemäßen Heizplatte;
- Fig. 3: ist eine Querschnittsansicht einer weiteren Ausführungsform der erfindungsgemäßen Heizplatte;
- Fig. 4: ist eine Draufsicht auf eine Trägerplatte, die zur Verwendung bei einer erfindungsgemäßen Heizplatte geeignet ist;
- Fig. 5: ist eine Perspektivansicht eines Dauermagneten, der für einen Einsatz bei der erfindungsgemäßen Heizplatte geeignet ist;
- Fig. 6: ist eine Draufsicht auf eine Verschleißplatte, die zum Einsatz bei der erfindungsgemäßen Heizplatte geeignet ist;
- Fig. 7: ist eine Draufsicht auf eine andere Verschleißplatte, die zum Einsatz bei der erfindungsgemäßen Heizplatte geeignet ist; und
- Fig. 8: ist eine teilweise Querschnittsansicht der Verschleißplatte aus Fig. 7.

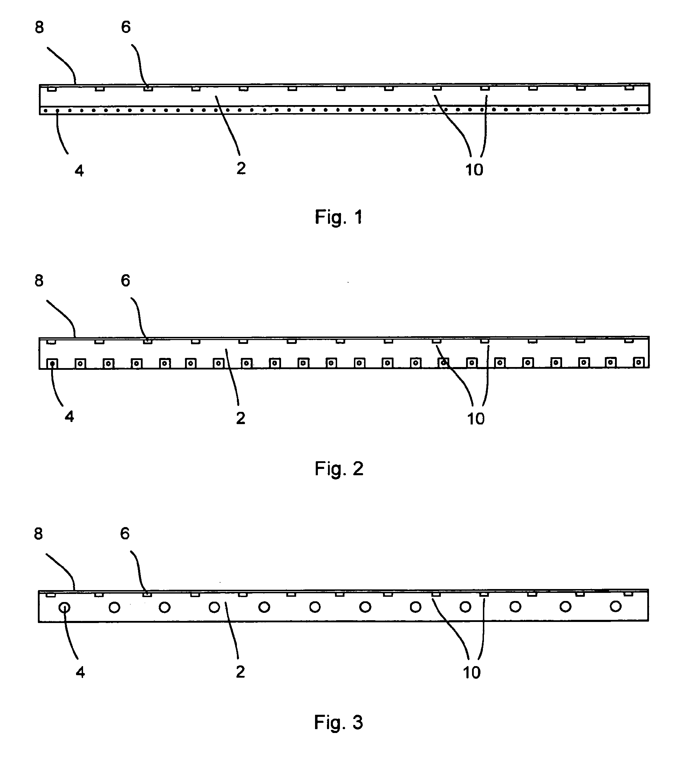

In Fig. 1 bis 3 sind drei verschiedene Ausführungsformen der erfindungsgemäßen Heizplatte dargestellt. Die Heizplatte umfasst jeweils eine Trägerplatte 2 aus einem gut Wärme leitenden Material, vorzugsweise Aluminium. Zur Aufheizung der Trägerplatte 2 dient ein Heizmittel 4, welches in der in Fig. 1 dargestellten Ausführungsform als ein durchgängiger flacher Heizkörper ausgebildet ist, der vorzugsweise auf die Trägerplatte 2 aufvulkanisiert ist.

Ebenso ist es möglich (siehe Fig. 2), dass das Heizmittel 4 durch mehrere Heizleiter gebildet ist, welche in Nuten der Trägerplatte 2 eingelegt sind. Die Heizleiter sind hierbei vorzugsweise biegsam. Schließlich ist es auch möglich, dass das Heizmittel 4 (siehe Fig. 3) durch mehrere Heizpatronen gebildet ist, die in Ausnehmungen in der Trägerplatte eingebracht sind, oder dass es durch mindestens ein in die Heizplatte integriertes Induktionselement gebildet ist, welches über vorzugsweise stationäre Induktionsspulen in der Arbeitsstation, in der die Heizplatte eingesetzt wird, erhitzt wird.

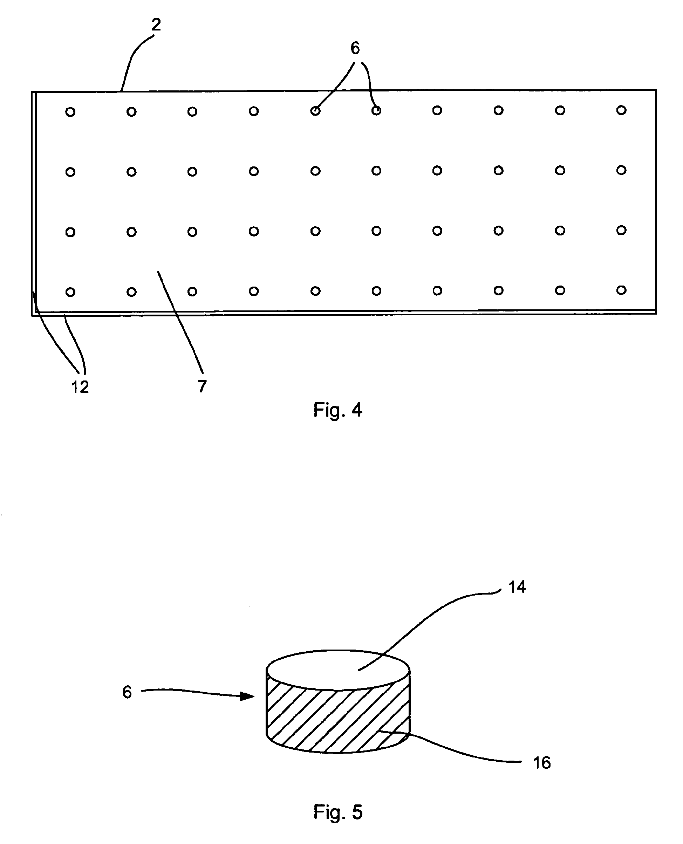

Gemäß Fig. 4 ist auf einer Arbeitsfläche 7 der Trägerplatte 2, die im eingebauten Zustand der Heizplatte der zu erwärmenden Folie zugewandt ist und in den Fig. 1 bis 3 jeweils die obere Oberfläche darstellt, eine Verschleißplatte 8 magnetisch an der Trägerplatte 2 gehalten. Die Verschleißplatte 8 besteht vorzugsweise aus ferritischem Edelstahl und weist eine Dicke von 0,2 bis 1,0 mm, vorzugsweise 0,5 bis 0,8 mm, auf.

Die magnetische Halterung der Verschleißplatte 8 an der Arbeitsfläche 7 der Trägerplatte 2 kann auf viele verschiedene Arten erfolgen, besonders bevorzugt ist es jedoch, wenn Dauermagnete 6 in Ausnehmungen 10 der Trägerplatte 2 eingesetzt und dort befestigt sind, Vorzugsweise sind die Ausnehmungen 10 in der Arbeitsfläche 7 der Trägerplatte 2 ausgebildet. Außerdem sind die Dauermagnete 6 hitzebeständig und bevorzugt in einem regelmäßigen Muster auf der Trägerplatte 2 verteilt.

Zur Ausrichtung der Verschleißplatte 8 an der Trägerplatte 2 weist die Trägerplatte 2 am Rand ihrer Arbeitsfläche 7 zwei vorstehende, senkrecht zueinander verlaufende Anschlagkanten 12 auf, an denen die Verschleißplatte 8 abgestützt ist (siehe Fig. 4).

Zwischen Verschleißplatte 8 und der Arbeitsfläche 7 der Trägerplatte 2 kann zur Verbesserung des Wärmeübergangs und als Schmierschicht für das einfachere Austauschen der Verschleißplatte 8 eine Wärmeleitpaste verwendet werden.

In Fig. 5 ist ein Beispiel eines verwendbaren Dauermagneten 6 dargestellt. Vorzugsweise weist der Dauermagnet 6 eine flache Bauform und einen robusten Aufbau auf. Bevorzugt befindet sich das magnetische Material 14 beispielsweise in einem verzinkten Stahltopf 16 und ist in der jeweiligen Ausnehmung 10 der Trägerplatte 2 befestigt, beispielsweise durch Verklebung mittels eines Silikonklebers. Ebenso ist es möglich, die Dauermagnete 6 in die Ausnehmungen 10 einzupressen, einzuschrauben etc. Der Stahltopf 16 kann auch entfallen.

Die Dauermagnete 6 sind hitzebeständig bis zu einer Temperatur von mindestens 150 °C. Als magnetisches Material 14 kommen beispielsweise Hartferrite in Frage.

Je näher die Verschleißplatte 8 an die Dauermagnete 6 heranreicht, desto größer ist die Haftkraft. Idealerweise schließen die Dauermagnete 6 plan mit der Arbeitsfläche 7 der Trägerplatte 2 ab, so dass die Verschleißplatte 8 direkt auf den Dauermagneten 6 aufliegt.

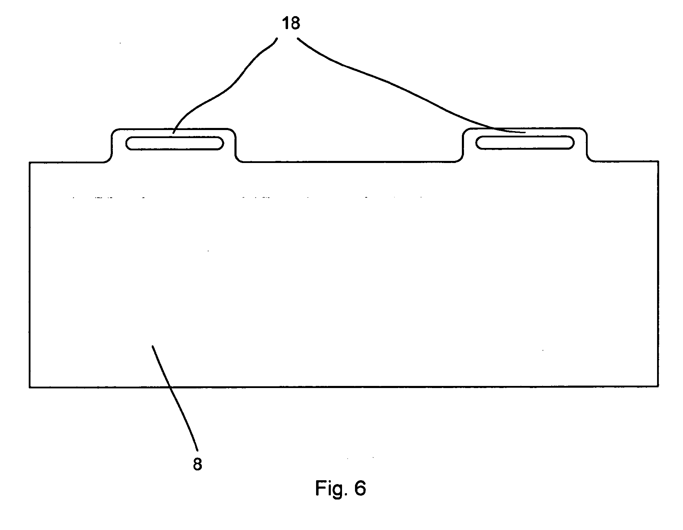

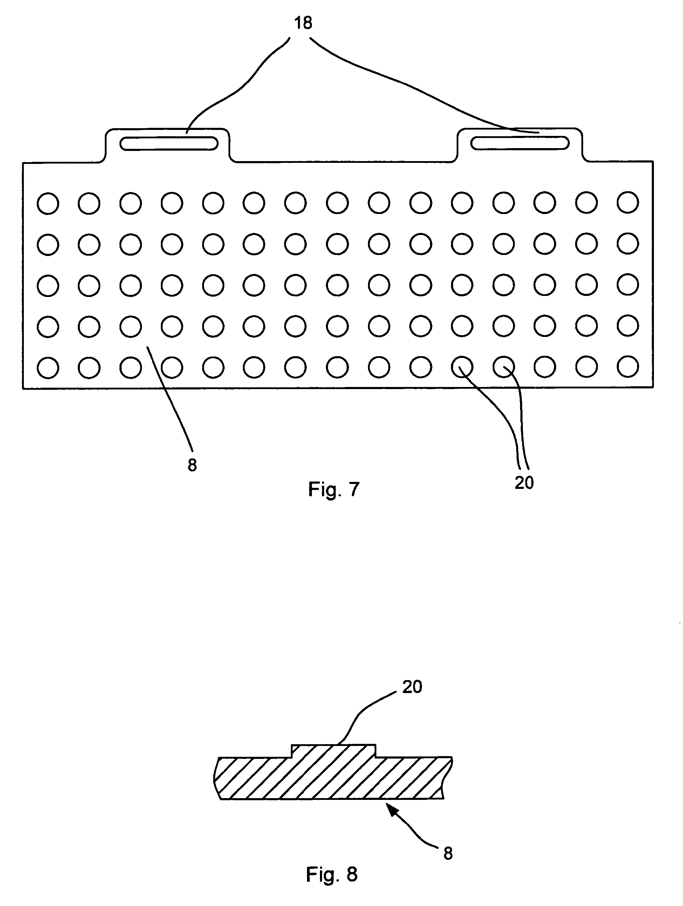

Wie in Fig. 6 und 7 dargestellt ist, kann die Verschleißplatte 8 zum besseren Austausch mindestens ein Griffelement 18, im vorliegenden Fall zwei Griffelemente 18, aufweisen. Außerdem ist es vorteilhaft, wenn die Verschleißplatte 8 auf ihrer der Arbeitsfläche 7 der Trägerplatte 2 abgewandten Seite eine verschleißfeste Antihaftbeschichtung aufweist.

Die Verschließplatte 8 aus Fig. 6 ist grundsätzlich eben ausgestaltet, kann aber eine Oberflächenstruktur mit einer Höhe der einzelnen Erhebungen (nicht dargestellt) von 5 bis 30 µm aufweisen. Dies kann mit der oben erwähnten Antihaftbeschichtung kombiniert werden. Beide Maßnahmen dienen dazu, ein Anhaften der zu erwärmenden Folie an der Heizplatte nach dem Erwärmen zu verhindern. Gleichzeitig müssen genügend Erhebungen und damit Kontaktzonen vorhanden sein, damit ein ausreichender Wärmeübertrag von der Verschleißplatte 8 auf die Folie stattfindet.

Die Verschleißplatte 8 aus Fig. 7 und 8 weist auf ihrer der Arbeitsfläche 7 der Trägerplatte 2 abgewandten Seite vorstehende Plateaus 20 auf, die bevorzugt eine Höhe von wenigen Zehntel Millimeter aufweisen. Auf diese Weise können besonders schwierig zu verformende Zonen der Folie stärker aufgeheizt werden. Die Oberflächenstruktur mit den Erhebungen einer Höhe von 5 bis 30 µm und die Antihaftbeschichtung werden auch auf den Plateaus 20 bevorzugt angewendet.

Mit der erfindungsgemäßen Heizplatte ist ein schneller Formatwechsel möglich und es können individuelle Verschleißplatten für unterschiedliche Folientypen auf einfache Weise installiert werden. Die Wartungskosten werden dadurch verringert und die Standzeiten der Hauptelemente einer Heizplatte, nämlich der Trägerplatte 2 mit dem Heizmittel 3, deutlich erhöht. Außerdem ist die Reinigung der neuen Heizplatte wesentlich einfacher.

## Patentansprüche

1. Heizplatte zum Erwärmen einer Folie für eine Thermoformmaschine, mit
einer stark Wärme leitenden Trägerplatte (2) mit einer Arbeitsfläche (7),
einem Heizmittel (4), das mit der Trägerplatte (2) verbunden ist, und
einer Verschleißschicht im Bereich der Arbeitsfläche (7) der Trägerplatte (2),
**dadurch gekennzeichnet, dass**
die Verschleißschicht als austauschbare Verschleißplatte (8) ausgebildet ist, die magnetisch an der Arbeitsfläche (7) der Trägerplatte (2) gehalten ist.

2. Heizplatte nach Anspruch 1, **dadurch gekennzeichnet, dass** die Trägerplatte (2) hitzebeständige Dauermagnete (6) aufweist.

3. Heizplatte nach Anspruch 2, **dadurch gekennzeichnet, dass** die Dauermagnete (6) in einem regelmäßigem Muster auf der Trägerplatte (2) verteilt sind.

4. Heizplatte nach Anspruch 2 oder 3, **dadurch gekennzeichnet, dass** die Dauermagnete (6) in Ausnehmungen (10) der Trägerplatte (2) befestigt sind.

5. Heizplatte nach Anspruch 4, **dadurch gekennzeichnet, dass** die Ausnehmungen (10) in der Arbeitsfläche (7) der Trägerplatte (2) ausgebildet sind.

6. Heizplatte nach einem der Ansprüche 2 bis 5, **dadurch gekennzeichnet, dass** die Dauermagnete (6) flache Haftmagnete mit kreisförmiger Grundfläche sind.

7. Heizplatte nach einem der vorangehenden Ansprüche, **dadurch gekennzeichnet, dass** die Verschleißplatte (8) aus einem ferritischen Edelstahl besteht.

8. Heizplatte nach einem der vorangehenden Ansprüche, **dadurch gekennzeichnet, dass** die Verschleißplatte (8) eine Dicke von 0,2 bis 1,0 mm, vorzugsweise 0,5 bis 0,8 mm, aufweist.

9. Heizplatte nach einem der vorangehenden Ansprüche, **dadurch gekennzeichnet, dass** die Verschleißplatte (8) auf ihrer der Arbeitsfläche (7) der Trägerplatte (2) abgewandten Seite eine Oberflächenstruktur mit einer Höhe der Erhebungen von 5 bis 30 µm aufweist.

10. Heizplatte nach einem der vorangehenden Ansprüche, **dadurch gekennzeichnet, dass** die Verschleißplatte (8) auf ihrer der Arbeitsfläche (7) der Trägerplatte (2) abgewandten Seite eine verschleißfeste Antihaftbeschichtung aufweist.

11. Heizplatte nach einem der vorangehenden Ansprüche, **dadurch gekennzeichnet, dass** zwischen Verschleißplatte (8) und Arbeitsfläche (7) der Trägerplatte (2) eine Wärmeleitpaste aufgebracht ist.

12. Heizplatte nach einem der vorangehenden Ansprüche, **dadurch gekennzeichnet, dass** die Verschleißplatte (8) mindestens ein Griffelement (18) aufweist.

13. Heizplatte nach einem der vorangehenden Ansprüche, **dadurch gekennzeichnet, dass** die Trägerplatte (2) am Rand ihrer Arbeitsfläche (7) zwei vorstehende, senkrecht zueinander verlaufende Anschlagkanten (12) aufweist, an denen die Verschleißplatte (8) abgestützt ist.

## Claims

1. Heating plate for heating a sheet for a thermoforming machine, comprising:
a highly heat-conductive support plate (2) having a working surface (7),
a heating means (4) connected to the support plate (2), and
a wear layer in the region of the working surface (7) of the support plate (2),
**characterised in that**
the wear layer is formed as a replaceable wear plate (8), which is held magnetically to the working surface (7) of the support plate (2).

2. Heating plate according to claim 1, **characterised in that** the support plate (2) comprises heat-resistant permanent magnets (6).

3. Heating plate according to claim 2, **characterised in that** the permanent magnets (6) are distributed in a regular pattern on the support plate (2).

4. Heating plate according to either claim 2 or claim 3, **characterised in that** the permanent magnets (6) are fastened in recesses (10) of the support plate (2).

5. Heating plate according to claim 4, **characterised in that** the recesses (10) are formed in the working surface (7) of the support plate (2).

6. Heating plate according to any one of claims 2 to 5, **characterised in that** the permanent magnets (6) are planar clamping magnets having a circular base surface.

7. Heating plate according to any one of the preceding claims, **characterised in that** the wear plate (8) consists of a ferritic stainless steel.

8. Heating plate according to any one of the preceding claims, **characterised in that** the wear plate (8) has a thickness of from 0.2 to 1.0 mm, preferably 0.5 to 0.8 mm.

9. Heating plate according to any one of the preceding claims, **characterised in that**, on its side facing away from the working surface (7) of the support plate (2), the wear plate (8) comprises a surface structure with elevations measuring from 5 to 30 µm in height.

10. Heating plate according to any one of the preceding claims, **characterised in that**, on its side facing away from the working surface (7) of the support plate (2), the wear plate (8) comprises a wear-resistant, non-stick coating.

11. Heating plate according to any one of the preceding claims, **characterised in that** a thermally conductive paste is applied between the wear plate (8) and the working surface (7) of the support plate (2).

12. Heating plate according to any one of the preceding claims, **characterised in that** the wear plate (8) comprises at least one gripping element (18).

13. Heating plate according to any one of the preceding claims, **characterised in that**, at the edge of the working surface (7), the support plate (2) comprises two projecting stop edges (12) which extend mutually perpendicular and against which the wear plate (8) is supported.

## Revendications

1. Plaque chauffante destinée au réchauffement d'une feuille pour une machine de thermoformage, comprenant
- une plaque support (2) fortement conductrice de chaleur avec une surface de travail (7),
- un moyen de chauffage (4), assemblé avec la plaque support (2), et
- une couche d'usure dans la zone de la surface de travail (7) de la plaque support (2),
**caractérisée en ce que** la couche d'usure est réalisée sous forme de plaque d'usure interchangeable (8), maintenue par magnétisme sur la surface de travail (7) de la plaque support (2).

2. Plaque chauffante suivant la revendication 1, **caractérisée en ce que** la plaque support (2) présente des aimants permanents (6) résistant à la chaleur.

3. Plaque chauffante suivant la revendication 2, **caractérisée en ce que** les aimants permanents (6) sont répartis en un modèle régulier sur la plaque support (2).

4. Plaque chauffante suivant l'une des revendications 2 et 3, **caractérisée en ce que** les aimants permanents (6) sont fixés dans des creux (10) de la plaque support (2).

5. Plaque chauffante suivant la revendication 4, **caractérisée en ce que** les creux (10) sont réalisés dans la surface de travail (7) de la plaque support (2).

6. Plaque chauffante suivant l'une des revendications 2 à 5, **caractérisée en ce que** les aimants permanents sont des aimants de fixation plats avec une surface de base circulaire.

7. Plaque chauffante suivant l'une des revendications précédentes, **caractérisée en ce que** la plaque d'usure (8) se compose d'un acier spécial ferritique.

8. Plaque chauffante suivant l'une des revendications précédentes, **caractérisée en ce que** la plaque d'usure (8) présente une épaisseur de 0,2 à 1,0 mm, de préférence de 0,5 à 0,8 mm.

9. Plaque chauffante suivant l'une des revendications précédentes, **caractérisée en ce que** la plaque d'usure (8) présente sur son côté opposé à la surface de travail (7) de la plaque support (2) une structure superficielle avec une hauteur des bossages de 5 à 30 µm.

10. Plaque chauffante suivant l'une des revendications précédentes, **caractérisée en ce que** la plaque d'usure (8) présente sur son côté opposé à la surface de travail (7) de la plaque support (2) un revêtement antiadhésif résistant à l'usure.

11. Plaque chauffante suivant l'une des revendications précédentes, **caractérisée en ce qu'**une pâte conductrice de chaleur est appliquée entre la plaque d'usure (8) et la surface de travail (7) de la plaque support (2).

12. Plaque chauffante suivant l'une des revendications précédentes, **caractérisée en ce que** la plaque d'usure (8) présente au moins un élément de prise (18).

13. Plaque chauffante suivant l'une des revendications précédentes, **caractérisée en ce que** la plaque support (2) présente sur le bord de sa surface de travail (7) deux arêtes de butée (12) en saillie, s'étendant perpendiculairement entre elles, sur lesquelles s'appuie la plaque d'usure (8).
